# EUROPEAN PATENT SPECIFICATION

(11) **EP 3 576 422 B1**
(45) Date of publication and mention of the grant of the patent: **22.09.2021**
(21) Application number: 18174609.0
(22) Date of filing: 28.05.2018
(51) Int. Cl.: H04Q 1/02

(54) **METHOD FOR MOUNTING A PANEL WITHIN A WIRING CABINET AND WIRING CABINET**
VERFAHREN ZUM ANBRINGEN EINER PLATTE IN EINEM INSTALLATIONSSCHRANK UND INSTALLATIONSSCHRANK
PROCÉDÉ DE MONTAGE D'UN PANNEAU À L'INTÉRIEUR D'UNE ARMOIRE DE CÂBLAGE ET ARMOIRE DE CÂBLAGE

(43) Date of publication of application: 04.12.2019
(73) Proprietor: ELDON Group, 28223 Madrid (ES)
(72) Inventor: Ramos, David, 28050 Madrid (ES)
(74) Representative: Grünecker Patent- und Rechtsanwälte PartG mbB

(56) References cited:
- EP-A1- 0 104 512
- US-A- 4 840 285
- US-A1- 2017 127 555
- US-B1- 7 564 696

## Description

This invention relates generally to a method according to the preamble of claim 1 for mounting a panel within a wiring cabinet using at least one fastening element. The panel has a rear and a front surface, and also has a first dimension with a first end and a second end.

The method comprises a step for mounting the panel with at least one first mounting element located at the first end of the panel, to at least one second mounting element of the wiring cabinet, so that the first and second mounting element interact as a tilting mechanism, so that in a premounted state the panel is rotatable.

The method further comprises a step for attaching the panel to at least one attachment element using at least one first fastening element, so that in a completely mounted state the rear surface of the panel is in direct contact with an attachment surface of the attachment element.

The attachment element has a retaining surface, wherein the retaining surface has at least one opening suitable for receiving the first fastening element, wherein the front surface of the panel also has at least one opening located at the second end of the panel for receiving the first fastening element. In a completely mounted state, the first fastening element retains the panel to the attachment element.

EP 0 901 207 A1 discloses a method according to the preamble of the independent claim. In the method described there for mounting a panel within a wiring cabinet, the first fastening element is formed by a set screw, which interacts with a cage nut that is attached to the attachment element. This method involves a series of laborious assembly steps, that are not only time consuming, but can also require the attachment element to be accessible from the rear side for the insertion of the cage nut. An additional example of such a method is disclosed by the document EP0104512, Magnetic Controls, published on 4 April 1984.

The present invention's object is to provide a time-saving method for easily mounting a panel within a wiring cabinet, so that the panel can be easily attached from the front side.

This object is accomplished by the features of the independent claim 1. Accordingly, in the case of a method according to the preamble of the independent claim 1, an inventive solution to the object exists, if the first fastening element is a snap-fastener, wherein the snap-fastener has a release mechanism for the purpose of detaching the panel from the attachment element, wherein the release mechanism is actuatable from the direction of the front surface of the panel.

The present invention allows an easier way of assembling and disassembling a panel inside a wiring cabinet. The snap-fastener directly arrests the panel in its completely mounted position, so that the panel can be installed by a single movement. The release mechanism of the snap-fastener also allows it to be easily disengaged from the attachment element, so that the panel can be disassembled from the wiring cabinet.

Advantageous embodiments of this invention are subject of the subclaims.

Preferably, the second mounting element is a round bar, wherein in a premounted state of the panel, the round bar serves as a rotation axis for the purpose of rotating the panel. This allows the panel to be easily rotated in order to mount it to the wiring cabinet.

Preferably, the round bar has at least one groove suitable for receiving the first mounting element. This aids keeping the panel from moving sideways and helps to align the snap-fastener with the opening in the attachment element.

Preferably, after mounting the panel to the second mounting element, the snap-fastener is preassembled to the panel, after which the panel is rotated into a completely mounted state, so that the snap-fastener interacts with the retaining surface, so that the panel is retained in the completely mounted state. The procedure of mounting and attaching the panel to the wiring cabinet is therefore completed by a single pivoting movement, wherein the snap-fastener directly retains the panel in its final mounted position.

Preferably, the panel has at least one standing seam, wherein the standing seam has a slot for receiving the second mounting element, so that the first mounting element is formed by the slot. This simplifies the design of the panel and allows for a simple sheet metal construction for the panel.

Preferably, the attachment element is mounted to at least one frame element of the wiring cabinet.

Preferably, the frame element of the wiring cabinet is arranged in a horizontal orientation, so that the attachment surface of the mounted attachment element is perpendicular to the frame element. This allows a more flexible application of the panel within the wiring cabinet, as the attachment element can be directly mounted to a location remote to the boundaries of the wiring cabinet.

Preferably, that the attachment element has at least one retaining element, wherein the attachment element in a premounted position is held undetachably to the frame element by the interaction of the retaining element with an opening of the frame element. The attachment element is therefore secured against inadvertent removal after being premounted to the frame element, which simplifies its mounting process.

Preferably, the attachment element in a completely mounted position is attached to at least one frame element by means of at least one second fastening element.

Preferably, the second fastening element is a snap-fastener, wherein the snap-fastener has a release mechanism for the purpose of detaching the attachment element from the frame element. This further simplifies the assembly of the attachment element, as it can be easily attached to and detached from the wiring cabinet.

Preferably, the attachment element has at least one securing element, wherein in a completely mounted position of the attachment element, the securing element restricts the movement of the attachment element in at least one direction. This enhances the stability of the attachment element in a completely mounted position. Especially in combination with a snap-fastener as fastening element, the securing element allows the second fastening element to be combined with a opening in the frame element, that is larger than the fastening element in at least one dimension, wherein the securing element prevents movement of the second fastening element in this dimension.

Preferably, the attachment element is a metal sheet element, wherein the metal sheet element has a main body with a first surface that is in direct contact with at least one frame element the attachment element is mounted to, wherein the main body has an opening for receiving the second fastening element, wherein the attachment surface of the attachment element are formed by a first tab, which has an opening suitable for receiving the first fastening element, wherein the retaining element is formed by a second tab, wherein the second tab has a lug, which engages an opening of the frame element in such a way, that the attachment element in a premounted position is held undetachably to the frame element, wherein the second tab with the lug has a length exceeding the dimension of the opening in the frame element, wherein the securing element is formed by a third tab.

Preferably, the frame element has a row of openings, wherein the openings are suitable for receiving the retaining element, for receiving the securing element, and for receiving the second fastening element.

Preferably, the wiring cabinet is comprised of at least two cabinet elements, wherein in a completely mounted state the panel overlaps the connection point of the two cabinet elements.

Preferably, the attachment element is mounted to a first frame element of a first cabinet element and to a second frame element of a second cabinet element, so that in a completely mounted position of the attachment element, the first frame element and the second frame element are interconnected by means of the attachment element.

Preferably, the panel in a completely mounted state is adjacent to at least one secondary panel, so that the front surface of the panel is flush with the front side of the secondary panel.

Preferably, the first cabinet element contains a first secondary panel and the second cabinet element contains a second secondary panel, wherein the first and second secondary panel are orientated in such a way, that the front side of the first secondary panel and the front side of the second secondary panel are in the same plane, wherein the panel in a completely mounted state conceals the gap between the first secondary panel and the second secondary panel in such a way, that the front side of the panel is flush with the front side of the first secondary panel and the front side of the second secondary panel.

Preferably, the secondary panel has a standing seam, wherein the standing seam has a hole for receiving the round bar, wherein the round bar is supported on at least one end by the standing seam of the secondary panel.

The present invention also provides a wiring cabinet with a panel, wherein the panel is mounted within the cabinet by means of a method according to one of the aforementioned embodiments.

An example of the execution of this invention is explained in detail in the following drawings.
Figure 1 shows a compilation of a preferred embodiment of the panel with the components used for mounting it within a wiring cabinet.
Figure 2 shows a detailed view of the first end of the panel and a preferred embodiment of the method for mounting the panel with its first end to a second mounting element.
Figure 3 shows a detailed view of the second end of the panel and a preferred embodiment of the method for attaching the panel with its second end to an attachment element.
Figure 4 shows the connection between the attachment element and the control cabinet frame in a premounted position of the attachment element.
Figure 5 shows the connection of the second mounting element to the wiring cabinet frame.
Figure 6 illustrates the interaction of the first mounting element and the second mounting element

For the following explanations, the same parts are designated by the same reference signs. If a Figure contains reference signs that are not described in more detail in the corresponding description of the Figure, reference is made to preceding or subsequent descriptions of the Figure.

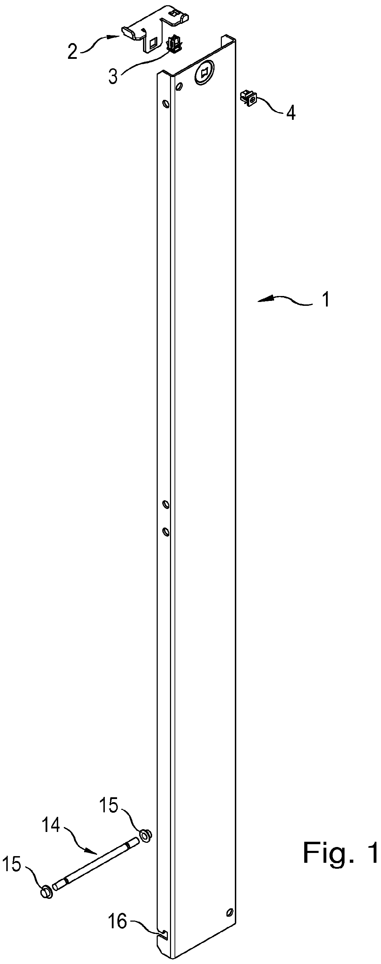

Figure 1 shows the panel 1 with an attachment element 2 and the second mounting element in the form of a round bar 14, which has a flanged bushing 15 attached to each of its ends. The first end of the panel 1 has a first mounting element in the form of a slot 16, which is integrated into a standing seam of the panel 10. The attachment element 2 for attaching the panel 1 to by means of a first fastening element 4 has a second fastening element 3 for attaching the attachment element 2 to a frame element 25 of the wiring cabinet 19.

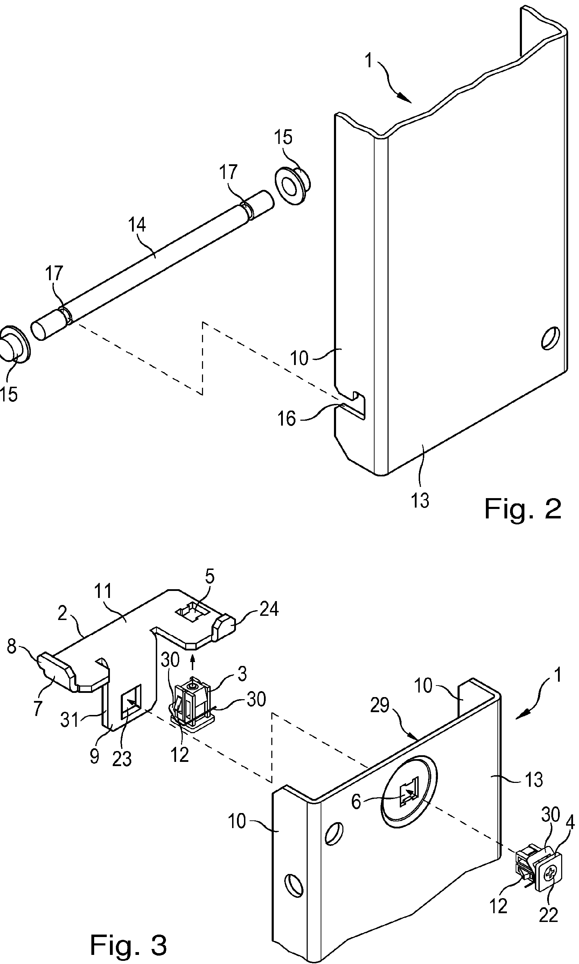

As shown in Figure 2, the round bar 14 has two grooves 17 for receiving the slots 16 in the standing seams 10 of the panel 1. The panel 1 is supported with the slots 16 in the grooves 17 in such a way that it cannot slip in the installation direction or in the direction of the axis of the round bar 14. The flanged bushings 15 attached to both ends of the round bar 14 separate the standing seams 10 of the panel from adjacent components of the wiring cabinet 19, and also support the round bar 14 in its mounted position within the wiring cabinet 19.

Figure 3 shows the step of attaching the panel 1 to the attachment element 2, which is formed by a metal sheet element, by means of the first fastening element in form of a first snap fastener 4. The first snap fastener 4 is inserted through an opening 6 into the panel 1, whereupon the first snap fastener 4 is inserted through a first opening 23 in the attachment element 2.

The retaining clamps 12 of the first snap fastener 4 thereby retain the panel 1 to the attachment element 2, wherein the first snap fastener 4 is pretensioned by two leaf springs 30. The retaining clamps 12 of the first snap fastener can be retracted by the use of an actuation mechanism in the form of a set screw 22, so that the retaining clamps 12 and the set screw 22 work together in the form of a release mechanism for the snap fastener. The screw head of the set screw 22 is thereby accessible from the front side 13 of the panel 1.

The rear surface 29 of the panel 1 in a completely mounted state is in direct contact with the attachment surface 9 of the attachment element 2, whereby the attachment surface 9 is formed by a first tab 31, which is bent by 90° against the main body 11 of the attachment element 2.

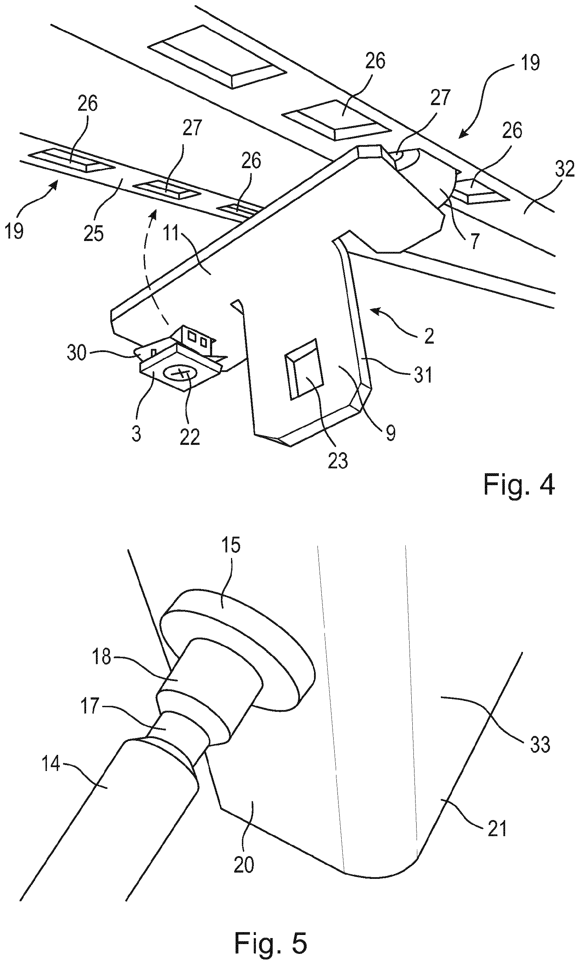

As shown in Figure 4, the retaining element in form of a second tab 7 of the attachment element 2 retains the attachment element 2 in a premounted position. The second tab 7 has a lug 8, which together with the second tab 7 can be engaged with an opening 27 of a first frame element 32, which has a row 26 of identical openings 27. The combined length of the second tab 7 and the lug 8 extends over the length of the opening 27, so that the attachment element 2 in a premounted position is held undetachably to the first frame element 32 by the lug 8.

The attachment element has a second opening 5 for receiving a second fastening element in form of a second snap fastener 3, which is identical in construction to the first snap fastener 4. In a completely mounted position of the attachment element 2 the second snap fastener 3 retains the attachment element 2 with its main body 11 to a second frame element 25, wherein the second snap fastener 3 with its retaining clamps 12 engages with an opening 27 in the second frame element 25. The securing element in form of a third tab 24 of the attachment element 2 restricts its freedom of movement by securing it against one of the holes 27 of the second frame element 25.

As shown in figure 5, an end section 18 of the round bar 14 is inserted into a flanged bushing 15. The flanged bushing 15 in turn is inserted into a hole in a standing seam 20 of a secondary panel 21. The flanged bushing 15 increases the diameter of the round bar 14, so that it fits the diameter of the hole in the standing seam 20. The diameter of the round bar 14 is smaller than that of the hole to ensure sufficient backlash for the round bar 14, so it can be easily inserted between two standing seams 20. The end section 18 is preferably corrugated to ensure a good connection to the flanged bushings 15.

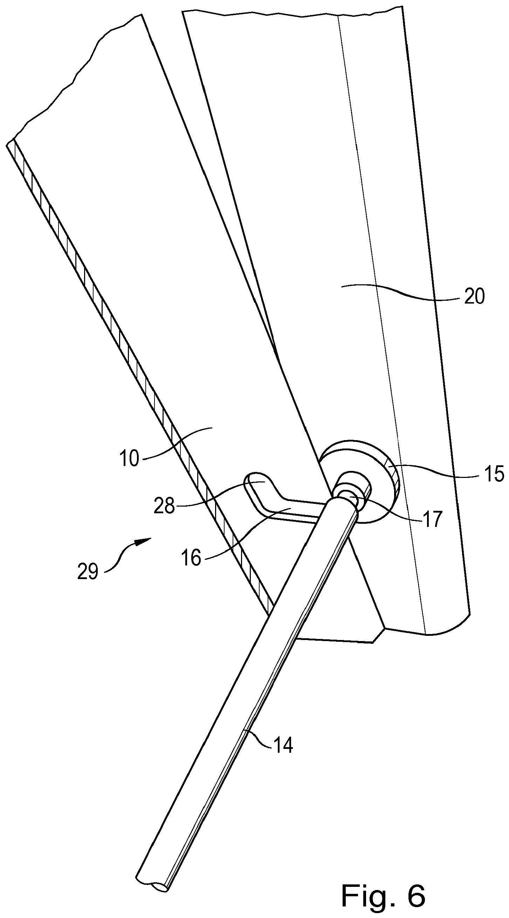

As shown in figure 6, the collar of the flanged bushing 15 is flush with the groove 17 of the round bar 14, so that the standing seam 10 of the panel 1 is separated from the standing seam 20 of the adjacent secondary panel 21. For mounting the panel 1 to the round bar 14, the panel 1 is inserted with the slot 16 onto the round bar 14, wherein the round slot 16 has a recess 28, in which the round bar 14 is held in a rotatable position, so that the slot 16 and the round bar 14 interact as tilting mechanism. In a completely mounted state of the panel 1, the front surface 13 of the panel 1 is flush with the front surface 33 of the adjacent secondary panel 21.

The skilled person will appreciate that the invention is not limited to the above embodiment. Instead of having the first mounting element in the form of a slot in a standing seam and the second mounting element in the form of a round bar, a corresponding tilting mechanism can also be formed by a hitch as the first mounting element and a grommet as the second mounting element.

## Claims

1. Method for mounting a panel (1) within a wiring cabinet (19) using at least one fastening element (4), wherein the panel (1) has a rear surface (29) and a front surface (13), and wherein the panel has a first dimension with a first end and a second end, the method comprising:
- mounting the panel with at least one first mounting element (16) located at the first end of the panel, to at least one second mounting element (14) of the wiring cabinet (19), so that the first and second mounting element interact as a tilting mechanism, so that in a premounted state the panel (1) is rotatable
- attaching the panel (1) to at least one attachment element (2) using at least one first fastening element (4), so that in a completely mounted state the rear surface (29) of the panel (1) is in direct contact with an attachment surface (9) of the attachment element (2), wherein the attachment surface (9) has at least one opening (23) for receiving the first fastening element (4), wherein the front surface (13) of the panel (1) has at least one opening (6) located at the second end of the panel (1) for receiving the first fastening element (4), and wherein the first fastening element (4) in the completely mounted state retains the panel (1) to the attachment element (2)
**characterised in that**
the first fastening element (4) is a snap-fastener (4), wherein the snap-fastener (4) has a release mechanism (22) for the purpose of detaching the panel (1) from the attachment element (2), wherein the release mechanism (22) is actuatable from the front surface (13) of the panel (1).

2. Method according to claim **1, characterised in that** the second mounting element (14) is a round bar (14), wherein in a premounted state of the panel (1), the round bar (14) serves as a rotation axis for the purpose of rotating the panel (1).

3. Method according to claim **2, characterised in that** the round bar (14) has at least one groove (17) suitable for receiving the first mounting element (16).

4. Method according to one of the claims **1** to **3, characterised in that** after mounting the panel (1) to the second mounting element (14), the snap-fastener (4) is preassembled to the panel (1), after which the panel (1) is rotated into a completely mounted state, so that the snap-fastener (4) interacts with the retaining element (2), so that the panel (1) is retained in the completely mounted state.

5. Method according to one of the claims **1** to **4, characterised in that** the panel (1) has at least one standing seam (10), wherein the standing seam (10) has a slot (16) for receiving the second mounting element (14), so that the first mounting element (16) is formed by the slot (16).

6. Method according to one of the claims **1** to **5, characterised in that** the attachment element (2) is mounted to at least one frame element (32) of the wiring cabinet.

7. Method according to claim **6, characterised in that** the attachment element (2) has at least one retaining element (7), wherein the attachment element (2) in a premounted position is held to the frame element (32) by the interaction of the retaining element (7) with an opening (27) of the frame element (32).

8. Method according to claim **6** or **7, characterised in that** the attachment element (2) in a completely mounted position is attached to at least one frame element (25) by means of at least one second fastening element (3).

9. Method according to claim **8, characterised in that** the second fastening element (3) is a snap-fastener (3), wherein the snap-fastener (3) has a release mechanism (22) for the purpose of detaching the attachment element (2) from the frame element (25).

10. Method according to one of the claims **6** to **9, characterised in that** the attachment element (2) has at least one securing element (24), wherein in a completely mounted position of the attachment element (2), the securing element (24) restricts the movement of the attachment element (2) in at least one direction.

11. Method according to one of the claims **1** to **10, characterised in that** the wiring cabinet (19) is comprised of at least two cabinet elements, wherein in a completely mounted state the panel (1) overlaps the connection point of the two cabinet elements.

12. Method according to one of the claims **6** to **10,** and according to claim **11, characterised in that** the attachment element (2) is mounted to a first frame element (32) of a first cabinet element and to a second frame element (25) of a second cabinet element, so that in a completely mounted position of the attachment element (2), the first frame element and the second frame element are interconnected by means of the attachment element (2).

13. Method according to one of the claims **1** to **12, characterised in that** the panel (1) in a completely mounted state is adjacent to at least one secondary panel (21), so that the front surface (13) of the panel (1) is flush with the front side (33) of the secondary panel (21).

14. Method according to claim **2** or **3,** and according to claim **13, characterised in that** the secondary panel (21) has a standing seam (20), wherein the standing seam (2) has a hole for receiving the round bar (14), wherein the round bar (14) is supported on at least one end by the standing seam (20) of the secondary panel (21).

15. Wiring cabinet (19) with a panel (1), wherein the panel (1) is mounted within the wiring cabinet (19) by means of at least one fastening element (4), wherein the panel (1) has a rear surface (29) and a front surface (13), and wherein the panel (1) has a first dimension with a first end and a second end, wherein the panel (1) is mounted with at least one first mounting element (16) located at the first end of the panel, to at least one second mounting element (14) of the wiring cabinet (19), so that the first (16) and second mounting element (14) interact as a tilting mechanism, so that in a premounted state the panel (1) is rotatable, and wherein the panel (1) is attached to at least one attachment element (2) using at least one first fastening element (4), so that in a completely mounted state the rear surface (29) of the panel (1) is in direct contact with an attachment surface (9) of the attachment element (2), wherein the attachment surface (9) has at least one opening (23), which, in the completely mounted state, receives the first fastening element (4), wherein the front surface (13) of the panel (1) has at least one opening (6) located at the second end of the panel (1), wherein the first fastening element (4) is received in the opening (6), and wherein the first fastening element (4) in the completely mounted state retains the panel (1) to the attachment element (2), **characterised in that** the first fastening element (4) is a snap-fastener (4), wherein the snap-fastener (4)has a release mechanism (22) for the purpose of detaching the panel (1) from the attachment element (2), wherein the release mechanism (22) is actuatable from the front surface (13) of the panel (1).

## Patentansprüche

1. Verfahren zum Montieren einer Platte (1) im Inneren eines Verkabelungsschranks (19) unter Verwendung wenigstens eines Befestigungselementes (4), wobei die Platte (1) eine Rückseite (29) sowie eine Vorderseite (13) hat, die Platte eine erste Abmessung mit einem ersten Ende und einem zweiten Ende hat und das Verfahren umfasst:
- Montieren der Platte mit wenigstens einem ersten Montageelement (16), das sich an dem ersten Ende der Platte befindet, an wenigstens einem zweiten Montageelement (14) des Verkabelungsschranks (19), so dass das erste und das zweite Montageelement als ein Kippmechanismus so zusammenwirken, dass, in einem vormontierten Zustand, die Platte (1) gedreht werden kann,
- Anbringen der Platte (1) an wenigstens einem Anbringungselement (2) unter Verwendung wenigstens eines ersten Befestigungselementes (4), so dass in einem vollständig montierten Zustand die Rückseite (29) der Platte (1) in direktem Kontakt mit einer Anbringungsfläche (9) des Anbringungselementes (2) ist, wobei die Anbringungsfläche (9) wenigstens eine Öffnung (23) zum Aufnehmen des ersten Befestigungselementes (4) aufweist, die Vorderseite (13) der Platte (1) wenigstens eine Öffnung (6) aufweist, die sich an dem zweiten Ende der Platte (1) befindet, um das erste Befestigungselement (4) aufzunehmen, und das erste Befestigungselement (4) in dem vollständig montierten Zustand die Platte (1) an dem Anbringungselement (2) hält,
**dadurch gekennzeichnet, dass**
das erste Befestigungselement (4) ein Einrast-Befestigungselement (4) ist, wobei das Einrast-Befestigungselement (4) einen Lösemechanismus (22) zum Trennen der Platte (1) von dem Anbringungselement (2) aufweist, und der Lösemechanismus (22) von der Vorderseite (13) der Platte (1) aus betätigt werden kann.

2. Verfahren nach Anspruch 1, **dadurch gekennzeichnet, dass** das zweite Montageelement (14) ein Rundstab (14) ist und in einem vormontierten Zustand der Platte (1) der Rundstab (14) als eine Drehachse zum Drehen der Platte (1) dient.

3. Verfahren nach Anspruch 2, **dadurch gekennzeichnet, dass** der Rundstab (14) wenigstens eine Nut (17) aufweist, die sich zum Aufnehmen des ersten Montageelementes (16) eignet.

4. Verfahren nach einem der Ansprüche 1 bis 3, **dadurch gekennzeichnet, dass** nach Montieren der Platte (1) an dem zweiten Montageelement (14) das Einrast-Befestigungselement (4) an der Platte (1) vormontiert wird und danach die Platte (1) in einen vollständig montierten Zustand gedreht wird, so dass das Einrast-Befestigungselement (4) mit dem Halteelement (2) so zusammenwirkt, dass die Platte (1) in dem vollständig montierten Zustand gehalten wird.

5. Verfahren nach einem der Ansprüche 1 bis 4, **dadurch gekennzeichnet, dass** die Platte (1) wenigstens einen Stehfalz (10) aufweist, wobei der Stehfalz (10) einen Schlitz (16) zum Aufnehmen des zweiten Montageelementes (14) aufweist, so dass das erste Montageelement (16) durch den Schlitz (16) gebildet wird.

6. Verfahren nach einem der Ansprüche 1 bis 5, **dadurch gekennzeichnet, dass** das Anbringungselement (2) an wenigstens einem Rahmenelement (32) des Verkabelungsschranks montiert wird.

7. Verfahren nach Anspruch 6, **dadurch gekennzeichnet, dass** das Anbringungselement (2) wenigstens ein Halteelement (7) aufweist, wobei das Anbringungselement (2) in einer vormontierten Position durch das Zusammenwirken des Halteelementes (7) mit einer Öffnung (27) des Rahmenelementes (32) an dem Rahmenelement (32) gehalten wird.

8. Verfahren nach Anspruch 6 oder 7, **dadurch gekennzeichnet, dass** das Anbringungselement (2) in einer vollständig montierten Position mittels wenigstens eines zweiten Befestigungselementes (3) an wenigstens einem Rahmenelement (25) angebracht ist.

9. Verfahren nach Anspruch 8, **dadurch gekennzeichnet, dass** das zweite Befestigungselement (3) ein Einrast-Befestigungselement (3) ist, wobei das Einrast-Befestigungselement (3) einen Lösemechanismus (22) zum Trennen des Anbringungselementes (2) von dem Rahmenelement (25) aufweist.

10. Verfahren nach einem der Ansprüche 6 bis 9, **dadurch gekennzeichnet, dass** das Anbringungselement (2) wenigstens ein Sicherungselement (24) aufweist, wobei das Sicherungselement (24) in einer vollständig montierten Position des Anbringungselementes (2) die Bewegung des Anbringungselementes (2) in wenigstens einer Richtung einschränkt.

11. Verfahren nach einem der Ansprüche 1 bis 10, **dadurch gekennzeichnet, dass** der Verkabelungsschrank (19) aus wenigstens zwei Schrankelementen besteht, wobei die Platte (1) in einem vollständig montierten Zustand den Verbindungspunkt der zwei Schrankelemente überlappt.

12. Verfahren nach einem der Ansprüche 6 bis 10 und nach Anspruch 11, **dadurch gekennzeichnet, dass** das Anbringungselement (2) an einem ersten Rahmenelement (32) eines ersten Schrankelementes und an einem zweiten Rahmenelement (25) eines zweiten Schrankelementes so montiert wird, dass in einer vollständig montierten Position des Anbringungselementes (2) das erste Rahmenelement und das zweite Rahmenelement mittels des Anbringungselementes (2) miteinander verbunden sind.

13. Verfahren nach einem der Ansprüche 1 bis 12, **dadurch gekennzeichnet, dass** die Platte (1) in einem vollständig montierten Zustand an wenigstens eine sekundäre Platte (21) so angrenzt, dass die Vorderseite (13) der Platte (1) mit der Vorderseite (33) der sekundären Platte (21) bündig ist.

14. Verfahren nach Anspruch 2 oder 3 und nach Anspruch 13, **dadurch gekennzeichnet, dass** die sekundäre Platte (21) einen Stehfalz (20) aufweist, wobei der Stehfalz (2) ein Loch zum Aufnehmen des Rundstabes (14) aufweist und der Rundstab (14) an wenigstens einem Ende über den Stehfalz (20) der sekundären Platte (21) gelagert ist.

15. Verkabelungsschrank (19) mit einer Platte (1), wobei die Platte (1) innerhalb des Verkabelungsschranks (19) mittels wenigstens eines Befestigungselementes (4) montiert ist, die Platte (1) eine Rückseite (29) und eine Vorderseite (13) aufweist, und die Platte (1) eine erste Abmessung mit einem ersten Ende und einem zweiten Ende hat, die Platte (1) mit wenigstens einem ersten Montageelement (16), das sich an dem ersten Ende der Platte befindet, an wenigstens einem zweiten Montageelement (14) des Verkabelungsschranks (19) so montiert ist, dass das erste Montageelement (16) und das zweite Montageelement (14) als ein Kippmechanismus so zusammenwirken, dass in einem vormontierten Zustand die Platte (1) gedreht werden kann, und die Platte (1) unter Verwendung wenigstens eines ersten Befestigungselementes (4) so an wenigstens einem Anbringungselement (2) befestigt ist, dass in einem vollständig montierten Zustand die Rückseite (29) der Platte (1) in direktem Kontakt mit einer Anbringungsfläche (9) des Anbringungselementes (2) ist, die Anbringungsfläche (9) wenigstens eine Öffnung (23) aufweist, die in dem vollständig montierten Zustand das erste Befestigungselement (4) aufnimmt, die Vorderseite (13) der Platte (1) wenigstens eine Öffnung (6) aufweist, die sich an dem zweiten Ende der Platte (1) befindet, das erste Befestigungselement (4) in der Öffnung (6) aufgenommen ist und das erste Befestigungselement (4) in dem vollständig montierten Zustand die Platte (1) an dem Anbringungselement (2) hält, **dadurch gekennzeichnet, dass** das erste Befestigungselement (4) ein Einrast-Befestigungselement (4) ist, wobei das Einrast-Befestigungselement (4) einen Lösemechanismus (22) zum Trennen der Platte (1) von dem Anbringungselement (2) aufweist und der Lösemechanismus (22) von der Vorderseite (13) der Platte (1) aus betätigt werden kann.

## Revendications

1. Procédé de montage d'un panneau (1) à l'intérieur d'une armoire électrique (19) en utilisant au moins un élément de fixation (4), dans lequel le panneau (1) a une surface arrière (29) et une surface avant (13), et dans lequel le panneau a une première dimension avec une première extrémité et une seconde extrémité, le procédé comprenant les étapes consistant à :
- monter le panneau avec au moins un premier élément de montage (16) situé à la première extrémité du panneau, sur au moins un second élément de montage (14) de l'armoire électrique (19), de sorte que le premier et le second élément de montage interagissent en tant que mécanisme d'inclinaison, de sorte que dans un état prémonté, le panneau (1) peut tourner
- attacher le panneau (1) à au moins un élément d'attache (2) en utilisant au moins un premier élément de fixation (4), de sorte que dans un état complètement monté, la surface arrière (29) du panneau (1) est en contact direct avec une surface d'attache (9) de l'élément d'attache (2), dans lequel la surface d'attache (9) a au moins une ouverture (23) pour recevoir le premier élément de fixation (4), dans lequel la surface avant (13) du panneau (1) a au moins une ouverture (6) située à la seconde extrémité du panneau (1) pour recevoir le premier élément de fixation (4), et dans lequel le premier élément de fixation (4) dans l'état complètement monté retient le panneau (1) sur l'élément d'attache (2)
**caractérisé en ce que**
le premier élément de fixation (4) est un bouton-pression (4), le bouton-pression (4) ayant un mécanisme de libération (22) dans le but de détacher le panneau (1) depuis l'élément d'attache (2), dans lequel le mécanisme de libération (22) peut être actionné depuis la surface avant (13) du panneau (1).

2. Procédé selon la revendication 1, **caractérisé en ce que** le second élément de montage (14) est une barre ronde (14), dans lequel dans un état prémonté du panneau (1), la barre ronde (14) sert d'axe de rotation dans le but de faire tourner le panneau (1).

3. Procédé selon la revendication 2, **caractérisé en ce que** la barre ronde (14) a au moins une rainure (17) adaptée pour recevoir le premier élément de montage (16).

4. Procédé selon l'une des revendications 1 à 3, **caractérisé en ce qu'**après le montage du panneau (1) sur le second élément de montage (14), le bouton-pression (4) est préassemblé sur le panneau (1), après quoi le panneau (1) est tourné dans un état complètement monté, de sorte que le bouton-pression (4) interagit avec l'élément de retenue (2), de sorte que le panneau (1) est retenu dans l'état complètement monté.

5. Procédé selon l'une des revendications 1 à 4, **caractérisé en ce que** le panneau (1) a au moins un joint debout (10), dans lequel le joint debout (10) a une fente (16) pour recevoir le second élément de montage (14), de sorte que le premier élément de montage (16) est formé par la fente (16).

6. Procédé selon l'une des revendications 1 à 5, **caractérisé en ce que** l'élément d'attache (2) est monté sur au moins un élément de cadre (32) de l'armoire électrique.

7. Procédé selon la revendication 6, **caractérisé en ce que** l'élément d'attache (2) a au moins un élément de retenue (7), dans lequel l'élément d'attache (2) dans une position prémontée est maintenu sur l'élément de cadre (32) par l'interaction de l'élément de retenue (7) avec une ouverture (27) de l'élément de cadre (32).

8. Procédé selon la revendication 6 ou 7, **caractérisé en ce que** l'élément d'attache (2) dans une position complètement montée est attaché à au moins un élément de cadre (25) au moyen d'au moins un second élément de fixation (3).

9. Procédé selon la revendication 8, **caractérisé en ce que** le second élément de fixation (3) est un bouton-pression (3), dans lequel le bouton-pression (3) a un mécanisme de libération (22) dans le but de détacher l'élément d'attache (2) depuis l'élément de cadre (25).

10. Procédé selon l'une des revendications 6 à 9, **caractérisé en ce que** l'élément d'attache (2) a au moins un élément d'arrimage (24), dans lequel dans une position complètement montée de l'élément d'attache (2), l'élément d'arrimage (24) limite le déplacement de l'élément d'attache (2) dans au moins une direction.

11. Procédé selon l'une des revendications 1 à 10, **caractérisé en ce que** l'armoire électrique (19) est constituée d'au moins deux éléments d'armoire, dans lequel dans un état complètement monté, le panneau (1) chevauche le point de connexion des deux éléments d'armoire.

12. Procédé selon l'une des revendications 6 à 10, et selon la revendication 11, **caractérisé en ce que** l'élément d'attache (2) est monté sur un premier élément de cadre (32) d'un premier élément d'armoire et sur un second élément de cadre (25) d'un second élément d'armoire, de sorte que dans une position complètement montée de l'élément d'attache (2), le premier élément de cadre et le second élément de cadre sont interconnectés au moyen de l'élément d'attache (2).

13. Procédé selon l'une des revendications 1 à 12, **caractérisé en ce que** le panneau (1) dans un état complètement monté est adjacent à au moins un panneau secondaire (21), de sorte que la surface avant (13) du panneau (1) est affleurante au côté avant (33) du panneau secondaire (21).

14. Procédé selon la revendication 2 ou 3, et selon la revendication 13, **caractérisé en ce que** le panneau secondaire (21) a un joint debout (20), dans lequel le joint debout (2) a un trou pour recevoir la barre ronde (14), dans lequel la barre ronde (14) est supportée sur au moins une extrémité par le joint debout (20) du panneau secondaire (21).

15. Armoire électrique (19) avec un panneau (1), dans laquelle le panneau (1) est monté à l'intérieur de l'armoire électrique (19) au moyen d'au moins un élément de fixation (4), dans laquelle le panneau (1) a une surface arrière (29) et une surface avant (13), et dans laquelle le panneau (1) a une première dimension avec une première extrémité et une seconde extrémité, dans laquelle le panneau (1) est monté avec au moins un premier élément de montage (16) situé à la première extrémité du panneau, sur au moins un second élément de montage (14) de l'armoire électrique (19), de sorte que le premier (16) et le second élément de montage (14) interagissent en tant que mécanisme d'inclinaison, de sorte dans un état prémonté, le panneau (1) peut tourner, et dans laquelle le panneau (1) est attaché à au moins un élément d'attache (2) en utilisant au moins un premier élément de fixation (4), de sorte que dans un état complètement monté, la surface arrière (29) du panneau (1) est en contact direct avec une surface d'attache (9) de l'élément d'attache (2), dans laquelle la surface d'attache (9) a au moins une ouverture (23), qui, dans l'état complètement monté, reçoit le premier élément de fixation (4), dans laquelle la surface avant (13) du panneau (1) a au moins une ouverture (6) située à la seconde extrémité du panneau (1), dans laquelle le premier élément de fixation (4) est reçu dans l'ouverture (6), et dans laquelle le premier élément de fixation (4) dans l'état complètement monté retient le panneau (1) sur l'élément d'attache (2), **caractérisée en ce que** le premier élément de fixation (4) est un bouton-pression (4), le bouton-pression (4) ayant un mécanisme de libération (22) dans le but de détacher le panneau (1) depuis l'élément d'attache (2), dans laquelle le mécanisme de libération (22) peut être actionné depuis la surface avant (13) du panneau (1).
